# EUROPÄISCHE PATENTSCHRIFT

(11) **EP 2 866 989 B1**
(45) Veröffentlichungstag und Bekanntmachung des Hinweises auf die Patenterteilung: **01.04.2020**
(21) Anmeldenummer: 13729712.3
(22) Anmeldetag: 17.06.2013
(51) Int. Cl.: B27B 17/14

(54) **WERKZEUGMASCHINENTRENNVORRICHTUNG**
SEPARATING DEVICE FOR A MACHINE TOOL
DISPOSITIF DE SÉPARATION POUR MACHINE-OUTIL

(30) Priorität: 28.06.2012 DE 102012211085; 31.08.2012 DE 102012215461
(43) Veröffentlichungstag der Anmeldung: 06.05.2015
(73) Patentinhaber: Robert Bosch GmbH, 70442 Stuttgart (DE)
(72) Erfinder: ENGELFRIED, Uwe, 73760 Ostfildern (DE); GRULICH, Petr, 73230 Kirchheim/Teck (DE)
(86) Internationale Anmeldenummer: PCT/EP2013/062540
(87) Internationale Veröffentlichungsnummer: WO 2014/001131

(56) Entgegenhaltungen:
- WO-A1-2010/105809
- CH-A- 301 514
- GB-A- 2 042 974
- US-A- 4 382 334
- US-B1- 6 694 623

## Beschreibung

### Stand der Technik

Es sind bereits Werkzeugmaschinentrennvorrichtungen bekannt, die einen Schneidstrang und eine Führungseinheit zu einer Führung des Schneidstrangs aufweisen, wobei die Führungseinheit zusammen mit dem Schneidstrang ein geschlossenes System bildet. Eine solche Werkzeugmaschinentrennvorrichtung, gemäß dem Oberbegriff des Anspruchs 1, ist in WO2010/105809 offenbart.

### Offenbarung der Erfindung

Die Erfindung geht aus von einer Werkzeugmaschinentrennvorrichtung, insbesondere von einer Handwerkzeugmaschinentrennvorrichtung, mit zumindest einem Schneidstrang und mit zumindest einer Führungseinheit zu einer Führung des Schneidstrangs, die zusammen mit dem Schneidstrang ein geschlossenes System bildet.

Es wird vorgeschlagen, dass die Werkzeugmaschinentrennvorrichtung zumindest eine an der Führungseinheit angeordnete Schneidstrangspanneinheit umfasst, die zu einem Spiel- und/oder Toleranzausgleich des Schneidstrangs vorgesehen ist. Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Besonders bevorzugt wird der Schneidstrang in zumindest einem Betriebszustand umlaufend bewegt, insbesondere entlang einer Umfangsrichtung einer Führungseinheit der Werkzeugmaschinentrennvorrichtung. Besonders bevorzugt ist der Schneidstrang als Schneidkette ausgebildet. Es ist jedoch auch denkbar, dass der Schneidstrang eine andere, einem Fachmann als sinnvoll erscheinendene Ausgestaltung aufweist, wie beispielsweise eine Ausgestaltung als Schneidband, an dem mehrere Schneidstrangsegmente des Schneidstrangs angeordnet sind. Bevorzugt weist der Schneidstrang, entlang einer zumindest im Wesentlichen senkrecht zu einer Schneidebene des Schneidstrangs verlaufenden Richtung betrachtet, eine maximale Abmessung kleiner als 4 mm auf. Vorzugsweise ist die Abmessung als Breite des Schneidstrangs ausgebildet. Besonders bevorzugt weist der Schneidstrang, entlang der zumindest im Wesentlichen senkrecht zur Schneidebene des Schneidstrangs verlaufenden Richtung betrachtet, entlang einer Gesamtlänge des Schneidstrangs eine zumindest im Wesentlichen gleichbleibende maximale Abmessung auf. Die maximale Abmessung entspricht entlang der Gesamtlänge des Schneidstrangs bevorzugt einem Wert aus einem Wertebereich von 1 mm bis 3 mm. Infolgedessen weist die Werkzeugmaschinentrennvorrichtung, entlang einer Gesamterstreckung der Werkzeugmaschinentrennvorrichtung betrachtet, eine Gesamtbreite auf, die kleiner ist als 4 mm. Somit ist der Schneidstrang vorzugsweise dazu vorgesehen, einen Schneidspalt zu erzeugen, der, entlang der zumindest im Wesentlichen senkrecht zur Schneidebene des Schneidstrangs verlaufenden Richtung betrachtet, eine maximale Abmessung kleiner als 4 mm aufweist.

Bevorzugt umfassten die Schneidstrangsegmente jeweils zumindest ein Schnitttiefenbegrenzungselement. Der Begriff "Schnitttiefenbegrenzungselement" soll hier insbesondere ein Element definieren, das bei einer Bearbeitung eines Werkstücks ein Eindringen eines Schneidelements eines Schneidstrangsegments des Schneidstrangs in das Werkstück, insbesondere während eines Abhebens zumindest eines Werkstückspans, auf einen maximalen Wert begrenzt und somit eine maximale Spandicke eines bei einer Bearbeitung des Werkstücks abgetragenen Werkstückspans vorgibt. Das Schnitttiefenbegrenzungselement ist vorzugsweise, betrachtet entlang einer Schneidrichtung des Schneidelements, nach dem Schneidelement an einem Schneidenträgerelement des jeweiligen Schneidstrangsegments angeordnet. Es ist jedoch auch denkbar, dass das Schnitttiefenbegrenzungselement an einer anderen, einem Fachmann als sinnvoll erscheinenden Position am Schneidenträgerelement angeordnet ist, wie beispielsweise, betrachtet entlang der Schneidrichtung des Schneidelements, vor und nach dem Schneidelement, neben dem Schneidelement usw.

Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Bevorzugt weist die Führungseinheit zumindest ein Führungselement auf, insbesondere eine Führungsnut, durch das der Schneidstrang geführt wird. Bevorzugt ist der Schneidstrang, in einer Schneidebene des Schneidstrangs betrachtet, entlang eines gesamten Umfangs der Führungseinheit durch die Führungseinheit mittels des Führungselements, insbesondere der Führungsnut, geführt. Unter einer "Schneidrichtung" soll hier insbesondere eine Richtung verstanden werden, entlang der der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Der Ausdruck "vorgesehen" soll hier insbesondere speziell ausgelegt und/oder speziell ausgestattet definieren.

Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer tragbaren Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmitteln usw., voneinander trennbar sind. Der Ausdruck "Schneidstrangspanneinheit" soll hier insbesondere eine Einheit definieren, die dazu vorgesehen ist, in zumindest einem Zustand, insbesondere in einem mit einer Kopplungsvorrichtung einer Werkzeugmaschine gekoppelten Zustand der Führungseinheit, eine Spannkraft auf den Schneidstrang zu einem fertigungsbedingten Spiel- und/oder Toleranzausgleich auszuüben. Somit wird der Schneidstrang vorzugsweise mittels der Schneidstrangspanneinheit gespannt bzw. vorgespannt. Mittels der erfindungsgemäßen Ausgestaltung der Werkzeugmaschinentrennvorrichtung kann besonders vorteilhaft ein Ausgleich von Fertigungstoleranzen ermöglicht werden. Ferner kann vorteilhaft ein Spielausgleich des Schneidstrangs relativ zur Führungseinheit ermöglicht werden, wodurch eine besonders präzise Führung des Schneidstrangs mittels der Führungseinheit ermöglicht werden kann.

Erfindungsgemäß umfasst die Schneidstrangspanneinheit zumindest ein Schneidstranghalteelement, das dazu vorgesehen ist, den Schneidstrang in zumindest einer Kopplungsposition zu halten. Unter einem "Schneidstranghalteelement" soll hier insbesondere ein Element verstanden werden, das den Schneidstrang auf einer Antriebsseite der Führungseinheit in einem von einer Kopplungsvorrichtung einer tragbaren Werkzeugmaschine demontierten Zustand der Werkzeugmaschinentrennvorrichtung, insbesondere der Führungseinheit, zumindest im Wesentlichen in einer Kopplungsposition des Schneidstrangs hält. Insbesondere wird der Schneidstrang bei einer getrennt von einem in der Führungseinheit angeordneten Drehmomentübertragungselement ausgebildeten Werkzeugmaschinentrennvorrichtung mittels der Schneidstranghalteeinheit auf einer Antriebsseite der Führungseinheit in einem von der Kopplungsvorrichtung demontierten Zustand der Werkzeugmaschinentrennvorrichtung, insbesondere der Führungseinheit, in einer Kopplungsposition des Schneidstrangs gehalten. Unter einer "Antriebsseite" soll hier insbesondere eine Seite der Führungseinheit verstanden werden, an der ein Antriebselement der tragbaren Werkzeugmaschine zu einer Übertragung von Antriebskräften und/oder Antriebsdrehmomenten auf den Schneidstrang in einem mit der Kopplungsvorrichtung verbundenen Zustand der Werkzeugmaschinentrennvorrichtung, insbesondere der Führungseinheit, mit dem Schneidstrang und/oder einem Drehmomentübertragungselement der Werkzeugmaschinentrennvorrichtung koppelbar ist und insbesondere in die Führungseinheit eingreift. Der Begriff "Kopplungsposition" soll hier insbesondere eine Position des Schneidstrangs definieren, in der bei einer Kopplung der Werkzeugmaschinentrennvorrichtung, insbesondere der Führungseinheit, mit der Kopplungsvorrichtung der tragbaren Werkzeugmaschine der Schneidstrang direkt mit dem Antriebselement der tragbaren Werkzeugmaschine verbindbar ist und/oder der Schneidstrang in Eingriff mit dem Drehmomentübertragungselement ist, das direkt mit dem Antriebselement koppelbar ist. Bevorzugt ist das Antriebselement in der Kopplungsposition des Schneidstrangs in die Führungseinheit einführbar während der Schneidstrang entkoppelt von einem Halten des Schneidstrangs durch einen Bediener mit dem Antriebselement koppelbar ist. Hierdurch kann vorteilhaft eine einfache und komfortable Montage der Werkzeugmaschinentrennvorrichtung, insbesondere der Führungseinheit, an der Kopplungsvorrichtung gewährleistet werden, wobei ein Halten des Schneidstrangs von einem Bediener zur Kopplung des Antriebselements mit dem Schneidstrang vorteilhaft vermieden werden kann.

Erfindungsgemäß ist das Schneidstranghalteelement scheibenförmig ausgebildet. Unter "scheibenförmig" soll hier insbesondere eine geometrische Ausgestaltung eines Elements verstanden werden, das eine Erstreckung, insbesondere eine Stärke bzw. eine Höhe, entlang zumindest einer ersten Richtung aufweist, die um ein Vielfaches geringer ist als eine weitere Erstreckung des Elements, insbesondere eine Breite bzw. ein Durchmesser, entlang einer weiteren, zumindest im Wesentlichen parallel zur ersten Richtung verlaufenden Richtung. Es ist jedoch auch denkbar, dass das Schneidstranghalteelement eine andere, einem Fachmann als sinnvoll erscheinende Ausgestaltung aufweist. Erfindungsgemäß ist das Schneidstranghalteelement dazu vorgesehen, den Schneidstrang mittels einer formschlüssigen Verbindung, mittels einer Fläche des Schneidstranghalteelements, in zumindest einer Kopplungsposition, zu halten. Es ist jedoch auch denkbar, dass das Schneidstranghalteelement den Schneidstrang mittels eines anderen, einem Fachmann als sinnvoll erscheinenden Mittel, wie beispielsweise mittels einer magnetischen Kraft usw., in zumindest einer Position hält. Es kann vorteilhaft ein Hineinfallen des Schneidstrangs in eine Kopplungsausnehmung der Führungseinheit verhindert werden. Mittels der erfindungsgemäßen Ausgestaltung kann vorteilhaft ein kompaktes Schneidstranghalteelement erreicht werden.

Ferner wird vorgeschlagen, dass die Schneidstrangspanneinheit beweglich an der Führungseinheit gelagert ist. Der Ausdruck "beweglich gelagert" soll hier insbesondere eine Lagerung einer Einheit und/oder eines Elements relativ zu zumindest einer weiteren Einheit und/oder einem weiteren Element definieren, wobei die Einheit und/oder das Element, insbesondere entkoppelt von einer elastischen Verformung der Einheit und/oder des Elements und entkoppelt von bedingt durch ein Lagerspiel hervorgerufene Bewegungsmöglichkeiten, eine Bewegungsmöglichkeit entlang zumindest einer Achse entlang einer Strecke größer als 1 mm, bevorzugt größer als 10 mm und besonders bevorzugt größer als 20 mm und/oder eine Bewegungsmöglichkeit um zumindest eine Achse um einen Winkel größer als 10°, bevorzugt größer als 45° und besonders bevorzugt größer als 60° aufweist. Besonders bevorzugt ist die Schneidstrangspanneinheit translatorisch beweglich relativ zur Führungseinheit an der Führungseinheit gelagert. Es ist jedoch auch denkbar, dass die Schneidstrangspanneinheit rotatorisch relativ zur Führungseinheit an der Führungseinheit gelagert ist. Mittels der erfindungsgemäßen Ausgestaltung der Werkzeugmaschinentrennvorrichtung kann vorteilhaft eine einfache Nachspannung des Schneidstrangs realisiert werden.

Zudem wird vorgeschlagen, dass die Führungseinheit zumindest eine Lagerausnehmung aufweist, in die zumindest ein Lagerelement der Schneidstrangspanneinheit eingreift. Bevorzugt ist das Lagerelement als Lagerbolzen ausgebildet, der in die Lagerausnehmung eingreift und an einem Grundkörperelement der Schneidstrangspanneinheit fixiert ist. Es ist jedoch auch denkbar, dass das Lagerelement eine andere, einem Fachmann als sinnvoll erscheinende Ausgestaltung aufweist, wie beispielsweise eine Ausgestaltung als Führungsrippe usw. Mittels der erfindungsgemäßen Ausgestaltung kann vorteilhaft eine Anordnung der Schneidstrangspanneinheit an der Führungseinheit realisiert werden. Es kann ferner konstruktiv einfach eine bewegliche Lagerung der Schneidstrangspanneinheit an der Führungseinheit realisiert werden.

Besonders bevorzugt ist die Lagerausnehmung als Langloch ausgebildet. Es ist jedoch auch denkbar, dass die Lagerausnehmung eine andere, einem Fachmann als sinnvoll erscheinende Ausgestaltung aufweist, wie beispielsweise eine Ausgestaltung als Nut usw. Mittels der Ausgestaltung als Langloch kann konstruktiv einfach eine Bewegungsmöglichkeit der Schneidstrangspanneinheit relativ zur Führungseinheit zum Spiel- und/oder Toleranzausgleich des Schneidstrangs ermöglicht werden.

Des Weiteren wird vorgeschlagen, dass die Schneidstrangspanneinheit zumindest ein Verstellelement aufweist, das dazu vorgesehen ist, zumindest eine Position der beweglich gelagerten Schneidstrangspanneinheit relativ zur Führungseinheit einzustellen. Bevorzugt ist das Verstellelement beweglich gelagert. Hierbei kann das Verstellelement als Stellschraube, als Stellhebel oder als weiteres, einem Fachmann als sinnvoll erscheinendes Verstellelement ausgebildet sein. Das Verstellelement ist vorzugsweise direkt von einem Bediener bedienbar. Somit kann ein Bediener vorteilhaft ein Nachspannen des Schneidstrangs infolge einer Betätigung des Verstellelements erreichen.

Zudem wird vorgeschlagen, dass die Werkzeugmaschinentrennvorrichtung zumindest ein Drehmomentübertragungselement umfasst, das mittels der Schneidstrangspanneinheit relativ zur Führungseinheit translatorisch beweglich gelagert ist. Das Drehmomentübertragungselement greift bevorzugt zu einem Antrieb des Schneidstrangs in den Schneidstrang ein. Besonders bevorzugt ist das Drehmomentübertragungselement mittels der Schneidstrangspanneinheit translatorisch relativ zur Führungseinheit beweglich gelagert. Es ist jedoch auch denkbar, dass das Drehmomentübertragungselement mittels der Schneidstrangspanneinheit rotatorisch relativ zur Führungseinheit beweglich gelagert ist. Mittels der erfindungsgemäßen Ausgestaltung kann vorteilhaft eine kompakte Werkzeugmaschinentrennvorrichtung erreicht werden, die ein an der Führungseinheit gelagertes Drehmomentübertragungselement umfasst, das zu einem Spiel- und/oder Toleranzausgleich beweglich gelagert ist. Somit kann vorteilhaft eine lange Lebensdauer der Werkzeugmaschinentrennvorrichtung erreicht werden, da ein Nachspannen des Schneidstrangs mittels des Drehmomentübertragungselements und mittels der Schneidstrangspanneinheit möglich ist.

Ferner geht die Erfindung aus von der tragbaren Werkzeugmaschine mit der Kopplungsvorrichtung zur formschlüssigen und/oder kraftschlüssigen Kopplung mit der erfindungsgemäßen Werkzeugmaschinentrennvorrichtung. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 40 kg, bevorzugt kleiner als 10 kg und besonders bevorzugt kleiner als 5 kg. Mittels der erfindungsgemäßen Ausgestaltung der Werkzeugmaschinentrennvorrichtung kann konstruktiv einfach eine Führung des Schneidstrangs erreicht werden. Besonders bevorzugt bilden die erfindungsgemäße Werkzeugmaschinentrennvorrichtung und die erfindungsgemäße tragbare Werkzeugmaschine ein Werkzeugmaschinensystem. Es kann vorteilhaft eine tragbare Werkzeugmaschine erreicht werden, die besonders vorteilhaft für ein breites Einsatzspektrum geeignet ist.

Die erfindungsgemäße Werkzeugmaschinentrennvorrichtung, die erfindungsgemäße tragbare Werkzeugmaschine und/oder das erfindungsgemäße Werkzeugmaschinensystem soll/sollen hierbei nicht auf die oben beschriebene Anwendung und Ausführungsform beschränkt sein. Insbesondere können die erfindungsgemäße Werkzeugmaschinentrennvorrichtung, die erfindungsgemäße tragbare Werkzeugmaschine und/oder das erfindungsgemäße Werkzeugmaschinensystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße tragbare Werkzeugmaschine mit einer erfindungsgemäßen Werkzeugmaschinentrennvorrichtung in einer schematischen Darstellung,
- Fig. 2: eine Detailansicht der erfindungsgemäßen Werkzeugmaschinentrennvorrichtung in einer schematischen Darstellung,
- Fig. 3: eine Schnittansicht der erfindungsgemäßen Werkzeugmaschinentrennvorrichtung entlang der Linie III-III aus Figur 2 in einer schematischen Darstellung,
- Fig. 4: eine Detailansicht einer Schneidstrangspanneinheit der erfindungsgemäßen Werkzeugmaschinentrennvorrichtung in einer schematischen Darstellung,
- Fig. 5: eine Detailansicht einer alternativen erfindungsgemäßen Werkzeugmaschinentrennvorrichtung in einer schematischen Darstellung,
- Fig. 6: eine Detailansicht einer weiteren, alternativen erfindungsgemäßen Werkzeugmaschinentrennvorrichtung in einer Vorspannvorrichtung in einer schematischen Darstellung,
- Fig. 7: eine Detailansicht einer weiteren, alternativen erfindungsgemäßen Werkzeugmaschinentrennvorrichtung in einer schematischen Darstellung,
- Fig. 8: eine Schnittansicht der erfindungsgemäßen Werkzeugmaschinentrennvorrichtung aus Figur 7 in einer schematischen Darstellung,
- Fig. 9: eine Detailansicht einer weiteren, alternativen erfindungsgemäßen Werkzeugmaschinentrennvorrichtung in einer schematischen Darstellung und
- Fig. 10: eine Explosionsdetailansicht der Werkzeugmaschinentrennvorrichtung aus Figur 9 in einer schematischen Darstellung.

### Beschreibung der Ausführungsbeispiele

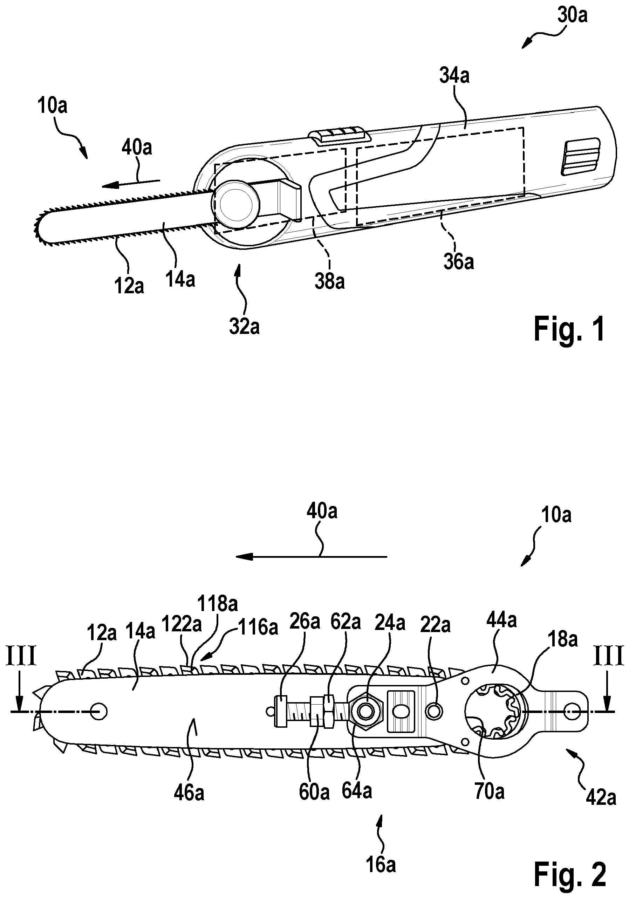

Figur 1 zeigt eine tragbare Werkzeugmaschine 30a mit einer Werkzeugmaschinentrennvorrichtung 10a, die zusammen ein Werkzeugmaschinensystem bilden. Die Werkzeugmaschinentrennvorrichtung 10a umfasst zumindest einen Schneidstrang 12a und zumindest eine Führungseinheit 14a zur Führung des Schneidstrangs 12a. Die Führungseinheit 14a bildet zusammen mit dem Schneidstrang 12a ein geschlossenes System. Die tragbare Werkzeugmaschine 30a weist ferner eine Kopplungsvorrichtung 32a zur formschlüssigen und/oder kraftschlüssigen Kopplung der Werkzeugmaschinentrennvorrichtung 10a auf. Die Kopplungsvorrichtung 32a kann hierbei als Bajonettverschluss und/oder als eine andere, einem Fachmann als sinnvoll erscheinende Kopplungsvorrichtung ausgebildet sein.

Ferner weist die tragbare Werkzeugmaschine 30a ein Werkzeugmaschinengehäuse 34a auf, das eine Antriebseinheit 36a und eine Getriebeeinheit 38a der tragbaren Werkzeugmaschine 30a umschließt. Die Antriebseinheit 36a und die Getriebeeinheit 38a sind zur Erzeugung eines auf die Werkzeugmaschinentrennvorrichtung 10a übertragbaren Antriebsmoments auf eine, einem Fachmann bereits bekannte Art und Weise wirkungsmäßig miteinander verbunden. Die Getriebeeinheit 38a ist als Winkelgetriebe ausgebildet. Die Antriebseinheit 36a ist als Elektromotoreinheit ausgebildet. Es ist jedoch auch denkbar, dass die Antriebseinheit 36a und/oder die Getriebeeinheit 38a eine andere, einem Fachmann als sinnvoll erscheinende Ausgestaltung aufweisen, wie beispielsweise eine Ausgestaltung der Getriebeeinheit 38a als Schneckengetriebe usw. Die Antriebseinheit 36a ist dazu vorgesehen, den Schneidstrang 12a der Werkzeugmaschinentrennvorrichtung 10a in zumindest einem Betriebszustand über die Getriebeeinheit 38a anzutreiben. Hierbei wird der Schneidstrangs 12a in der Führungseinheit 14a der Werkzeugmaschinentrennvorrichtung 10a entlang einer Schneidrichtung 40a des Schneidstrangs 12a in der Führungseinheit 14a bewegt.

Figur 2 zeigt die Werkzeugmaschinentrennvorrichtung 10a in einem von der Kopplungsvorrichtung 32a der tragbaren Werkzeugmaschine 30a entkoppelten Zustand. Die Werkzeugmaschinentrennvorrichtung 10a weist den Schneidstrang 12a und die Führungseinheit 14a auf, die zusammen ein geschlossenes System bilden. Der Schneidstrang 12a wird mittels der Führungseinheit 14a geführt. Hierzu weist die Führungseinheit 14a zumindest ein als Führungsnut ausgebildetes Führungselement (hier nicht näher dargestellt) auf, mittels dessen der Schneidstrang 12a geführt wird. Hierbei wird der Schneidstrang 12a mittels die Führungsnut begrenzenden Randbereichen der Führungseinheit 14a geführt. Es ist jedoch auch denkbar, dass das Führungselement in einer anderen, einem Fachmann als sinnvoll erscheinenden Art und Weise, wie beispielsweise als rippenartige Anformung an der Führungseinheit 14a, die in eine Ausnehmung an dem Schneidstrang 12a eingreift, ausgebildet ist. Der Schneidstrang 12a umfasst ferner eine Vielzahl miteinander verbundener Schneidstrangsegmente 116a, die den als Schneidkette ausgebildeten Schneidstrang 12a bilden.

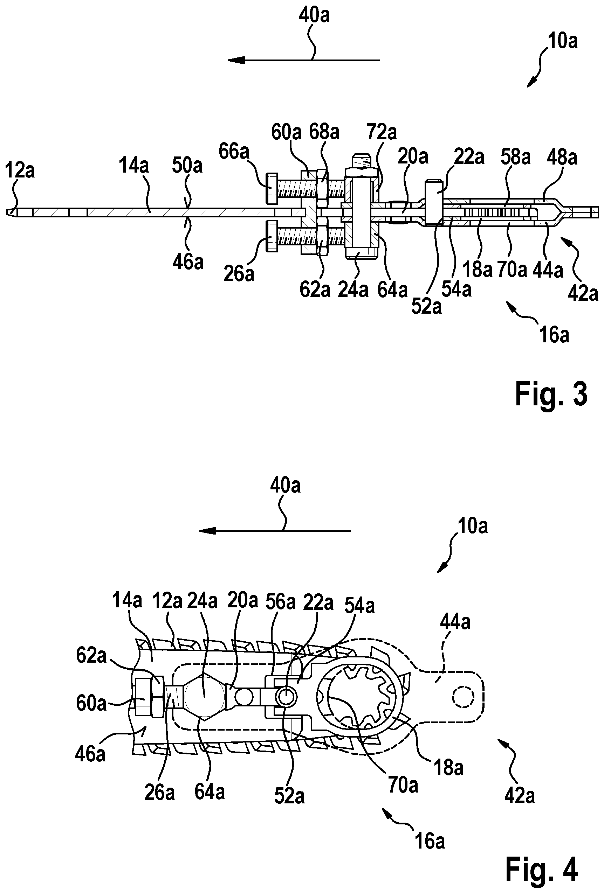

Die Werkzeugmaschinentrennvorrichtung 10a umfasst ferner zumindest eine an der Führungseinheit 14a angeordnete Schneidstrangspanneinheit 16a, die zu einem Spiel- und/oder Toleranzausgleich des Schneidstrangs 12a vorgesehen ist. Die Schneidstrangspanneinheit 16a ist hierbei zumindest teilweise an einer Antriebsseite 42a der Führungseinheit 14a angeordnet. Die Antriebsseite 42a und somit die Führungseinheit 14a sind mittels der Kopplungsvorrichtung 32a mit einem Abtriebselement (hier nicht näher dargestellt) der Getriebeeinheit 38a der tragbaren Werkzeugmaschine 30a koppelbar. Die Schneidstrangspanneinheit 16a umfasst zumindest ein an der Führungseinheit 14a angeordnetes Spannelement 44a. Das Spannelement 44a ist an einer Außenfläche 46a der Führungseinheit 14a angeordnet. Zudem umfasst die Schneidstrangspanneinheit 16a zumindest ein weiteres an der Führungseinheit 14a angeordnetes Spannelement 48a (Figur 3). Das weitere Spannelement 48a ist an einer weiteren Außenfläche 50a der Führungseinheit 14a angeordnet, die zumindest im Wesentlichen parallel zur Außenfläche 46a verläuft. Das Spannelement 44a und das weitere Spannelement 48a sind hierbei beweglich an der Führungseinheit 14a gelagert. Somit ist die Schneidstrangspanneinheit 16a beweglich an der Führungseinheit 14a gelagert. Die Führungseinheit 14a weist hierzu zumindest eine Lagerausnehmung 20a auf, in die zumindest ein Lagerelement 22a der Schneidstrangspanneinheit 16a eingreift. Die Lagerausnehmung 20a ist als Langloch ausgebildet (Figur 4). Das Lagerelement 22a der Schneidstrangspanneinheit 16a ist als Lagerbolzen ausgebildet. Es ist jedoch auch denkbar, dass das Lagerelement 22a eine andere, einem Fachmann als sinnvoll erscheinende Ausgestaltung aufweist, wie beispielsweise eine Ausgestaltung als geprägtes Element usw. Das Lagerelement 22a erstreckt sich zu einer Lagerung des Spannelements 44a und des weiteren Spannelements 48a zumindest im Wesentlichen senkrecht zur Außenfläche 46a und zur weiteren Außenfläche 50a durch das Spannelement 44a und das weitere Spannelement 48a hindurch. Das Lagerelement 22a ist zusammen mit dem Spannelement 44a und dem weiteren Spannelement 48a in der Lagerausnehmung 20a relativ zur Führungseinheit 14a translatorisch beweglich gelagert. Hierbei ist das Lagerelement 22a zusammen mit dem Spannelement 44a und dem weiteren Spannelement 48a entlang einer zumindest im Wesentlichen parallel zur Außenfläche 46a und/oder zur weiteren Außenfläche 50a verlaufenden Richtung in der Lagerausnehmung 20a relativ zur Führungseinheit 14a translatorisch beweglich gelagert.

Des Weiteren umfasst die Schneidstrangspanneinheit 16a zumindest ein Schneidstranghalteelement 18a, das dazu vorgesehen ist, den Schneidstrang 12a in zumindest einer Kopplungsposition zu halten. Das Schneidstranghalteelement 18a hält den Schneidstrang 12a nach einem Spannvorgang mittels der Schneidstrangspanneinheit 16a in der Kopplungsposition. Hierbei weist das Schneidstranghalteelement 18a eine Führungsausnehmung 52a auf, in die das Lagerelement 22a eingreift (Figur 4). Das Lagerelement 22a ist mittels einer Presspassung in der Führungsausnehmung 52a fixiert. Somit wird das Schneidstranghalteelement 18a mittels des Lagerelements 22a beweglich relativ zur Führungseinheit 14a gelagert. Es ist jedoch auch denkbar, dass das Lagerelement 22a mittels einer anderen, einem Fachmann als sinnvoll erscheinenden Art und Weise in der Führungsausnehmung 52a fixiert ist, wie beispielsweise mittels einer Prägung, einem Nietkopf, einem Bund usw. Zudem weist das Schneidstranghalteelement 18a einen Führungsfortsatz 54a auf, in dem die Führungsausnehmung 52a angeordnet ist. Der Führungsfortsatz 54a ist zu einer translatorischen Führung des Schneidstranghalteelements 18a während einer Bewegung des Schneidstranghalteelements 18a relativ zur Führungseinheit 14a vorgesehen. Hierzu ist der Führungsfortsatz 54a in einer an die Lagerausnehmung 20a angrenzenden Längsführungsausnehmung 56a der Führungseinheit 14a angeordnet (Figur 4). Der Führungsfortsatz 54a ist mittels einer Spielpassung in der Längsführungsausnehmung 56a angeordnet. Das Schneidstranghalteelement 18a ist scheibenförmig ausgebildet. Die Schneidstrangspanneinheit 16a weist ferner ein weiteres Schneidstranghalteelement 58a auf, das eine zum Schneidstranghalteelement 18a analoge Ausgestaltung aufweist. Das Schneidstranghalteelement 18a und das weitere Schneidstranghalteelement 58a sind, betrachtet entlang einer zumindest im Wesentlichen senkrecht zur Außenfläche 46a und zur weiteren Außenfläche 50a verlaufenden Richtung, zwischen dem Spannelement 44a und dem weiteren Spannelement 48a angeordnet (Figur 3).

Ferner weist die Schneidstrangspanneinheit 16a zumindest ein Verstellelement 26a auf, das dazu vorgesehen ist, zumindest eine Position eines Schneidstranghalteelements 18a der Schneidstrangspanneinheit 16a relativ zur Führungseinheit 14a einzustellen. Zudem ist das Verstellelement 26a dazu vorgesehen, eine Position des Spannelements 44a und/oder des weiteren Spannelements 48a relativ zur Führungseinheit 14a einzustellen. Das Verstellelement 26a ist beweglich in einem Querfortsatz 60a der Führungseinheit 14a an der Außenfläche 46a gelagert. Der Querfortsatz 60a erstreckt sich zumindest im Wesentlichen parallel zur Außenfläche 46a und zur weiteren Außenfläche 50a der Führungseinheit 14a. Hierbei ist der Querfortsatz 60a positionsfest an der Führungseinheit 14a angeordnet. Das Verstellelement 26a ist als Stellschraube ausgebildet, die mittels eines am Querfortsatz 60a angeordneten Gewindeelements 62a der Schneidstrangspanneinheit 16a beweglich gelagert ist. Es ist jedoch auch denkbar, dass das Gewindeelement 62a einstückig mit dem Querfortsatz 60a ausgebildet ist.

Das Verstellelement 26a stützt sich ferner an einem Anschlagelement 64a der Schneidstrangspanneinheit 16a ab. Das Anschlagelement 64a ist hierbei drehfest an einem weiteren Lagerelement 24a der Schneidstrangspanneinheit 16a angeordnet. Das weitere Lagerelement 24a erstreckt sich zu einer beweglichen Lagerung des Spannelements 44a und des weiteren Spannelements 48a an der Führungseinheit 14a durch die Lagerausnehmung 20a und zumindest im Wesentlichen senkrecht zur Außenfläche 46a und zur weiteren Außenfläche 50a durch das Spannelement 44a und das weitere Spannelement 48a hindurch. Ferner weist die Schneidstrangspanneinheit 16a zumindest ein weiteres Verstellelement 66a auf, das eine analoge Ausgestaltung zum Verstellelement 26a aufweist (Figur 3). Das weitere Verstellelement 66a ist hierbei an der weiteren Außenfläche 50a der Führungseinheit 14a beweglich im Querfortsatz 60a gelagert. Hierbei ist das weitere Verstellelement 66a mittels eines am Querfortsatz 60a an der weiteren Außenfläche 50a angeordneten weiteren Gewindeelements 68a der Schneidstrangspanneinheit 16a beweglich gelagert. Zudem stützt sich das weitere Verstellelement 66a an einem weiteren Anschlagelement 72a der Schneidstrangspanneinheit 16a ab. Das weitere Anschlagelement 72a ist an der weiteren Außenfläche 50a drehfest an dem weiteren Lagerelement 24a angeordnet.

Das Spannelement 44a und das weitere Spannelement 48a werden zusammen mit dem Schneidstranghalteelement 18a und dem weiteren Schneidstranghalteelement 58a infolge eines Einschraubens und/oder eines Herausschraubens des Verstellelements 26a in das und/oder aus dem Gewindeelement 62a und/oder infolge eines Einschraubens und/oder eines Herausschraubens des weiteren Verstellelements 66a in das und/oder aus dem weiteren Gewindeelement 68a relativ zur Führungseinheit 14a bewegt. Es ist jedoch auch denkbar, dass die Schneidstrangspanneinheit 16a lediglich ein Verstellelement 26a umfasst, das dazu vorgesehen ist, das Spannelement 44a und das weitere Spannelement 48a zusammen mit dem Schneidstranghalteelement 18a und dem weiteren Schneidstranghalteelement 58a relativ zur Führungseinheit 14a zu bewegen. Hierbei ist es denkbar, dass das Verstellelement 26a eine Verzahnung aufweist, die mit einem in der Lagerausnehmung 20a angeordneten Zahnstangenelement der Schneidstrangspanneinheit 16a zusammenwirkt und somit das Spannelement 44a und das weitere Spannelement 48a zusammen mit dem Schneidstranghalteelement 18a und dem weiteren Schneidstranghalteelement 58a relativ zur Führungseinheit 14a bewegt.

Zu einem Spiel- und/oder Toleranzausgleich des Schneidstrangs 12a und/oder zu einem Spannen des Schneidstrangs 12a wird die Werkzeugmaschinentrennvorrichtung 10a durch die Kopplungsvorrichtung 32a mit der tragbaren Werkzeugmaschine 30a gekoppelt. Hierbei greift das hier nicht näher dargestellte Abtriebselement der Getriebeeinheit 38a in den Schneidstrang 12a ein. Infolge einer Betätigung des Verstellelements 26a und des weiteren Verstellelements 66a werden das Spannelement 44a und das weitere Spannelement 48a zusammen mit dem Schneidstranghalteelement 18a und dem weiteren Schneidstranghalteelement 58a relativ zur Führungseinheit 14a bewegt. Somit ändert sich eine Spannung des Schneidstrangs 12a. Es ist jedoch auch denkbar, dass die Werkzeugmaschinentrennvorrichtung 10a mit einer hier nicht näher dargestellten Vorspannvorrichtung gekoppelt wird, die ein Abtriebselement umfasst, welches in einem gekoppelten Zustand der Werkzeugmaschinentrennvorrichtung 10a in den Schneidstrang 12a eingreift. Anschließend können ebenfalls durch eine Betätigung des Verstellelements 26a und des weiteren Verstellelements 66a das Spannelement 44a und das weitere Spannelement 48a zusammen mit dem Schneidstranghalteelement 18a und dem weiteren Schneidstranghalteelement 58a relativ zur Führungseinheit 14a bewegt werden, um eine Spannung des Schneidstrangs 12a zu ändern.

Nach einer Entnahme der Werkzeugmaschinentrennvorrichtung 10a von der Kopplungsvorrichtung 32a wird ein komplettes Hineinfallen des Schneidstrangs 12a in eine Kopplungsausnehmung 70a der Schneidstrangspanneinheit 16a mittels des Schneidstranghalteelements 18a und des weiteren Schneidstranghalteelements 58a weitestgehend verhindert. Hierbei liegen in einem von der tragbaren Werkzeugmaschine 30a oder von der Vorspannvorrichtung abgenommenen Zustand der Werkzeugmaschinentrennvorrichtung 10a Schneidelemente 122a der Schneidstrangsegmente 116a des Schneidstrangs 12a mit zumindest einem Punkt, bzw. einer Linie bzw. einer Fläche auf dem Schneidstranghalteelement 18a und dem weiteren Schneidstranghalteelement 58a auf. Ein Aufliegen der Flächen der Schneidelemente 122a wird infolge einer Verschränkung der Schneidelemente 122a relativ zueinander bzw. relativ zu einer Schneidebene des Schneidstrangs 12a realisiert.

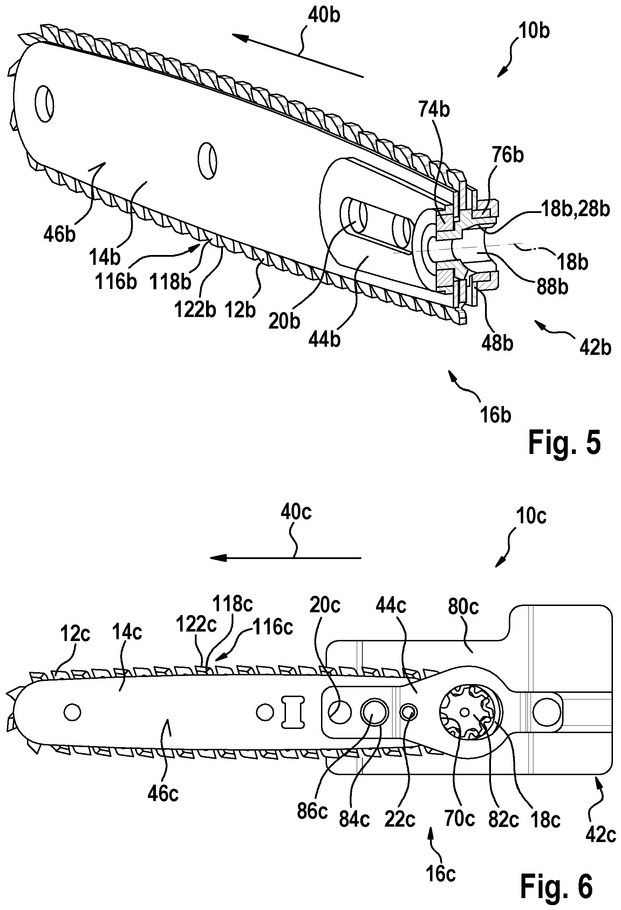

In Figuren 5 bis 10 sind alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis e hinzugefügt. Die nachfolgende Beschreibung beschränkt sich im Wesentlichen auf die Unterschiede zu dem ersten Ausführungsbeispiel in den Figuren 1 bis 4, wobei bezüglich gleichbleibender Bauteile, Merkmale und Funktionen auf die Beschreibung des ersten Ausführungsbeispiels in den Figuren 1 bis 4 verwiesen werden kann.

Figur 5 zeigt eine alternative Werkzeugmaschinentrennvorrichtung 10b, die zumindest einen Schneidstrang 12b und zumindest eine Führungseinheit 14b zu einer Führung des Schneidstrangs 12b umfasst. Die Führungseinheit 14b bildet zusammen mit dem Schneidstrang 12b ein geschlossenes System. Zudem umfasst die Werkzeugmaschinentrennvorrichtung 10b zumindest eine an der Führungseinheit 14b angeordnete Schneidstrangspanneinheit 16b, die zu einem Spiel- und/oder Toleranzausgleich des Schneidstrangs 12b vorgesehen ist. Ferner umfasst die Werkzeugmaschinentrennvorrichtung 10b zumindest ein Drehmomentübertragungselement 28b, das mittels der Schneidstrangspanneinheit 16b relativ zur Führungseinheit 14b translatorisch beweglich gelagert ist. Das Drehmomentübertragungselement 28b ist mittels eines Spannelements 44b und mittels eines weiteren Spannelements 48b der Schneidstrangspanneinheit 16b translatorisch beweglich relativ zur Führungseinheit 14b gelagert. Hierbei ist das Drehmomentübertragungselement 28b ferner mittels Drehlagerelementen 74b, 76b der Schneidstrangspanneinheit 16b, die am Spannelement 44b und am weiteren Spannelement 48b angeordnet sind, drehbar um eine Rotationsachse 78b in der Schneidstrangspanneinheit 16b gelagert. Das Spannelement 44b und das weitere Spannelement 48b sind an einer Antriebsseite 42b der Führungseinheit 14b angeordnet.

Das Drehmomentübertragungselement 28b greift mittels Antriebszähnen des Drehmomentübertragungselements 28b in den Schneidstrang 12b ein. Somit ist das Drehmomentübertragungselement 28b als Schneidstranghalteelement 18b der Schneidstrangspanneinheit 16b ausgebildet, das dazu vorgesehen ist, den Schneidstrang 12b in zumindest einer Kopplungsposition zu halten. Zudem umfasst das Drehmomentübertragungselement 28b zumindest eine Antriebskopplungsausnehmung 88b, die dazu vorgesehen ist, in einem mit einer tragbaren Werkzeugmaschine (hier nicht näher dargestellt) gekoppelten Zustand der Führungseinheit 14b bzw. der Werkzeugmaschinentrennvorrichtung 10b mit einem Abtriebselement einer Getriebeeinheit (hier nicht näher dargestellt) der tragbaren Werkzeugmaschine zusammenzuwirken. Das Spannelement 44b und das weitere Spannelement 48b sind mittels eines hier nicht näher dargestellten Verstellelements der Schneidstrangspanneinheit 16b relativ zur Führungseinheit 14b translatorisch beweglich gelagert (das Verstellelement kann hierbei analog zu dem in den Figuren 1 bis 4 beschriebenen Verstellelement 26a ausgebildet sein). Hierdurch wird ein Spiel- und/oder Toleranzausgleich des Schneidstrangs 12b und/oder ein Spannen des Schneidstrangs 12b ermöglicht. Das Drehmomentübertragungselement 28b ist somit mittels einer Bewegung des Spannelements 44b und des weiteren Spannelements 48b relativ zur Führungseinheit 14b zu einem Spiel- und/oder Toleranzausgleich des Schneidstrangs 12b und/oder ein Spannen des Schneidstrangs 12b vorgesehen. Hierbei ist es auch denkbar, dass das Spannelement 44b und das weitere Spannelement 48b vor einem ersten Betrieb der Werkzeugmaschinentrennvorrichtung 10b mittels einer Vorspannvorrichtung (hier nicht näher dargestellt) relativ zur Führungseinheit 14b bewegt werden, bis eine gewünschte Spannung des Schneidstrangs 12b eingestellt ist und anschließend mittels einer stoffschlüssigen Verbindung an der Führungseinheit 14b fixiert werden. Hinsichtlich weiteren Merkmalen und Funktionen der Werkzeugmaschinentrennvorrichtung 10b darf auf die in den Figuren 1 bis 4 beschriebene Werkzeugmaschinentrennvorrichtung 10a verwiesen werden.

Figur 6 zeigt eine weitere, alternative Werkzeugmaschinentrennvorrichtung 10c, die zumindest einen Schneidstrang 12c und zumindest eine Führungseinheit 14c zu einer Führung des Schneidstrangs 12c umfasst. Die Führungseinheit 14c bildet zusammen mit dem Schneidstrang 12c ein geschlossenes System. Zudem umfasst die Werkzeugmaschinentrennvorrichtung 10c zumindest eine an der Führungseinheit 14c angeordnete Schneidstrangspanneinheit 16c, die zu einem Spiel- und/oder Toleranzausgleich des Schneidstrangs 12c vorgesehen ist. Die Schneidstrangspanneinheit 16c umfasst zumindest ein Schneidstranghalteelement 18c, das dazu vorgesehen ist, den Schneidstrang 12c in zumindest einer Kopplungsposition zu halten. Insgesamt umfasst die Schneidstrangspanneinheit 16c zwei Schneidstranghalteelemente 18c, die eine analoge Ausgestaltung zu dem in den Figuren 1 bis 4 beschriebenen Schneidstranghalteelement 18a aufweisen. Die Schneidstrangspanneinheit 16c weist somit eine zumindest im Wesentlichen analoge Ausgestaltung zu der in den Figuren 1 bis 4 beschriebenen Schneidstrangspanneinheit 16a auf. Im Unterscheid zu der in den Figuren 1 bis 4 beschriebenen Schneidstrangspanneinheit 16a ist die Schneidstrangspanneinheit 16c entkoppelt von einem Verstellelement ausgebildet.

Zu einem Spiel- und/oder Toleranzausgleich des Schneidstrangs 12c und/oder zu einem Spannen des Schneidstrangs 12c wird die Werkzeugmaschinentrennvorrichtung 10c mit einer Vorspannvorrichtung 80c eines die Werkzeugmaschinentrennvorrichtung 10c und eine tragbare Werkzeugmaschine (hier nicht näher dargestellt) umfassenden Werkzeugmaschinensystems gekoppelt. Hierbei greift ein Antriebselement 82c der Vorspannvorrichtung 80c in den Schneidstrang 12c ein. Die Schneidstrangspanneinheit 16c wird mittels eines in zumindest eine Verstellausnehmung 84c der Schneidstrangspanneinheit 16c eingreifenden Verstellelements 86c der Vorspannvorrichtung 80c relativ zur Führungseinheit 14c bewegt. Somit ändert sich eine Spannung des Schneidstrangs 12c zu einem Spiel- und/oder Toleranzausgleich des Schneidstrangs 12c in der Führungseinheit 14c. Anschließend wird die Schneidstrangspanneinheit 16c mittels einer hier nicht näher dargestellten Fixiereinheit der Vorspannvorrichtung 80c formschlüssig, kraftschlüssig und/oder stoffschlüssig mit der Führungseinheit 14c verbunden. Nach einer Entnahme der Werkzeugmaschinentrennvorrichtung 10c von Vorspannvorrichtung 80c wird ein komplettes Hineinfallen des Schneidstrangs 12c in eine Kopplungsausnehmung 70c der Schneidstrangspanneinheit 16c mittels der Schneidstranghalteelemente 18c weitestgehend verhindert.

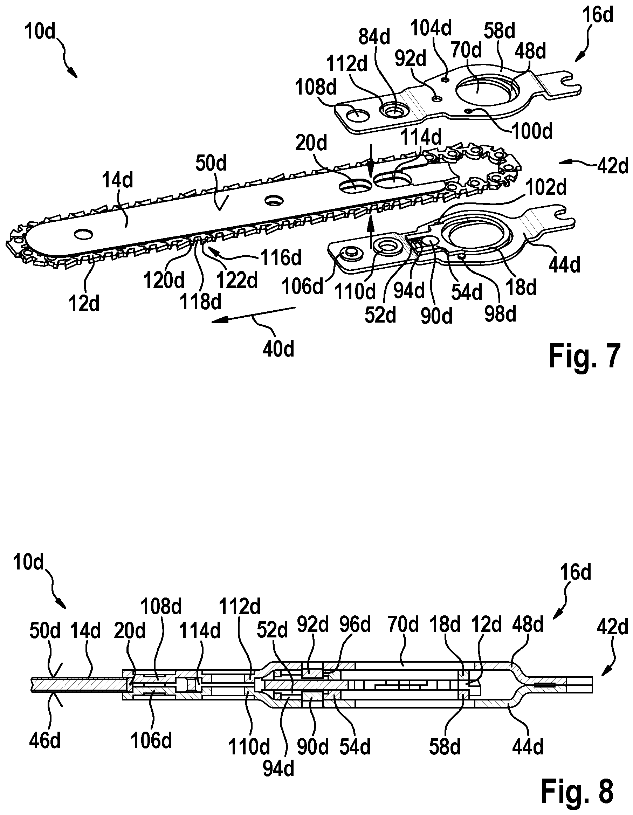

Figur 7 zeigt eine weitere, alternative Werkzeugmaschinentrennvorrichtung 10d, die zumindest einen Schneidstrang 12d und zumindest eine Führungseinheit 14d zu einer Führung des Schneidstrangs 12d umfasst. Die Führungseinheit 14d bildet zusammen mit dem Schneidstrang 12d ein geschlossenes System. Zudem umfasst die Werkzeugmaschinentrennvorrichtung 10d zumindest eine an der Führungseinheit 14d angeordnete Schneidstrangspanneinheit 16d, die zu einem Spiel- und/oder Toleranzausgleich des Schneidstrangs 12d vorgesehen ist. Die Schneidstrangspanneinheit 16d umfasst zumindest ein Schneidstranghalteelement 18d, das dazu vorgesehen ist, den Schneidstrang 12d in zumindest einer Kopplungsposition zu halten. Das Schneidstranghalteelement 18d ist scheibenförmig ausgebildet. Die Schneidstrangspanneinheit 16d weist ferner ein weiteres Schneidstranghalteelement 58d auf, das eine zum Schneidstranghalteelement 18d analoge Ausgestaltung aufweist. Das Schneidstranghalteelement 18d und das weitere Schneidstranghalteelement 58d sind, betrachtet entlang einer zumindest im Wesentlichen senkrecht zu einer Außenfläche 46d der Führungseinheit 14d und zu einer weiteren Außenfläche 50d der Führungseinheit 14d verlaufenden Richtung, zwischen einem Spannelement 44d der Schneidstrangspanneinheit 16d und einem weiteren Spannelement 48d der Schneidstrangspanneinheit 16d angeordnet (Figur 8).

Das Spannelement 44d und das weitere Spannelement 48d weisen jeweils zumindest ein Formschlussverbindungselement 90d, 92d zu einer formschlüssigen Verbindung mit dem Schneidstranghalteelement 18d bzw. dem weiteren Schneidstranghalteelement 58d auf. Die Formschlussverbindungselemente 90d, 92d sind jeweils als Verbindungsbolzen ausgebildet. Hierbei sind die Formschlussverbindungselemente 90d, 92d jeweils mittels eines Prägeverfahrens an das Spannelement 44d bzw. an das weitere Spannelement 48d angeformt. Das Schneidstranghalteelement 18d bzw. das weitere Schneidstranghalteelement 58d umfasst jeweils eine Formschlussausnehmung 94d, 96d, in die das jeweilige Formschlussverbindungselement 90d, 92d in einem mit dem Schneidstranghalteelement 18d bzw. dem weiteren Schneidstranghalteelement 58d verbundenen Zustand des Schneidstranghalteelements 18d bzw. des weiteren Schneidstranghalteelements 58d eingreift. Die Formschlussausnehmungen 94d, 96d sind hierbei als Langlöcher ausgebildet. Hiermit wird eine Längsbeweglichkeit zwischen dem Schneidstranghalteelement 18d bzw. dem weiteren Schneidstranghalteelement 58d und dem Spannelement 44d bzw. dem weiteren Spannelement 48d entlang einer Längsachse der Führungseinheit 14d zu einem Spiel- und/oder Toleranzausgleich des Schneidstrangs 12d und/oder zu einem Spannen des Schneidstrangs 12d ermöglicht. Hierbei ist es denkbar, dass zu einer Sicherung gegen ein Abnehmen des Schneidstranghalteelements 18d bzw. des weiteren Schneidstranghalteelements 58d von dem Spannelement 44d bzw. von dem weiteren Spannelement 48d das jeweilige Formschlussverbindungselement 90d, 92d nach einer Einführung in die jeweilige Formschlussausnehmung 94d, 96d in einem aus der Formschlussausnehmung 94d, 96d herausragenden Teilbereich des jeweiligen Formschlussverbindungselements 90d, 92d mittels eines Prägeverfahrens verprägt werden.

Des Weiteren umfassen das Spannelement 44d und das weitere Spannelement 48d jeweils zumindest ein Positionierelement 98d, 100d zu einer Positionierung des Schneidstranghalteelements 18d bzw. des weiteren Schneidstranghalteelements 58d entlang zumindest einer Richtung relativ zum Spannelement 44d bzw. zum weiteren Spannelement 48d. Die Positionierelemente 98d, 100d sind jeweils als Positionierbolzen ausgebildet, die zu einer Positionierung des Schneidstranghalteelements 18d bzw. des weiteren Schneidstranghalteelements 58d an einer Außenfläche des Schneidstranghalteelements 18d bzw. des weiteren Schneidstranghalteelements 58d anliegen. Es ist jedoch auch denkbar, dass die Positionierelemente 98d, 100d zu einer Positionierung des Schneidstranghalteelements 18d bzw. des weiteren Schneidstranghalteelements 58d in eine Ausnehmung des Schneidstranghalteelements 18d bzw. des weiteren Schneidstranghalteelements 58d eingreifen. Die Positionierelemente 98d, 100d sind jeweils mittels eines Prägeverfahrens an das Schneidstranghalteelement 18d bzw. an das weitere Schneidstranghalteelement 58d angeformt. Insgesamt weisen das Spannelement 44d und das weitere Spannelement 48d jeweils zumindest zwei Positionierelemente 98d, 100d, 102d, 104d auf. Hierbei sind die zwei Positionierelemente 98d, 100d, 102d, 104d, betrachtet entlang der Längsachse der Führungseinheit 14d, jeweils seitlich versetzt zum Formschlussverbindungselement 90d, 92d am Spannelement 44d bzw. am weiteren Spannelement 48d angeordnet. Somit bewirken die Positionierelemente 98d, 100d, 102d, 104d in einem miteinander verbundenen Zustand des Schneidstranghalteelements 18d bzw. des weiteren Schneidstranghalteelements 58d und des Spannelements 44d bzw. des weiteren Spannelements 48d eine Verdrehsicherung des Schneidstranghalteelements 18d bzw. des weiteren Schneidstranghalteelements 58d relativ zum Spannelement 44d bzw. zum weiteren Spannelement 48d.

Das Spannelement 44d und das weitere Spannelement 48d weisen ferner jeweils zumindest ein Verbindungselement 106d, 108d zu einer formschlüssigen Verbindung mit der Führungseinheit 14d auf. Die Verbindungselemente 106d, 108d sind jeweils als Verbindungsbolzen ausgebildet. Hierbei sind die Verbindungselemente 106d, 108d jeweils mittels eines Prägeverfahrens an das Spannelement 44d bzw. das weitere Spannelement 48d angeformt. Insgesamt weist das Spannelement 44d bzw. das weitere Spannelement 48d jeweils zumindest zwei Verbindungselemente 106d, 108d, 110d, 112d auf. Die Verbindungselemente 106d, 108d, 110d, 112d greifen in einem an der Führungseinheit 14d angeordneten Zustand des Spannelements 44d und des weiteren Spannelements 48d in Lagerausnehmungen 20d, 114d der Führungseinheit 14d ein. Die Lagerausnehmungen 20d, 114d sind jeweils als Langloch ausgebildet.

Zu einem Spiel- und/oder Toleranzausgleich des Schneidstrangs 12d und/oder zu einem Spannen des Schneidstrangs 12d wird die Werkzeugmaschinentrennvorrichtung 10d mit einer Vorspannvorrichtung (hier nicht näher dargestellt) eines die Werkzeugmaschinentrennvorrichtung 10d und eine tragbare Werkzeugmaschine (hier nicht näher dargestellt) umfassenden Werkzeugmaschinensystems gekoppelt. Hierbei greift ein Antriebselement (hier nicht näher dargestellt) der Vorspannvorrichtung in den Schneidstrang 12d ein. Die Schneidstrangspanneinheit 16d wird mittels eines in zumindest eine Verstellausnehmung 84d der Schneidstrangspanneinheit 16d eingreifenden Verstellelements (hier nicht näher dargestellt) der Vorspannvorrichtung relativ zur Führungseinheit 14d bewegt. Somit ändert sich eine Spannung des Schneidstrangs 12d zu einem Spiel- und/oder Toleranzausgleich des Schneidstrangs 12d in der Führungseinheit 14d. Anschließend wird die Schneidstrangspanneinheit 16d mittels einer hier nicht näher dargestellten Fixiereinheit der Vorspannvorrichtung durch ein Verschweißen und/oder ein Prägen zumindest eines der Verbindungselemente 106d, 108d, 110d, 112d an der Führungseinheit 14d fixiert. Nach einer Entnahme der Werkzeugmaschinentrennvorrichtung 10d von und/oder aus der Vorspannvorrichtung wird ein komplettes Hineinfallen des Schneidstrangs 12d in eine Kopplungsausnehmung 70d der Schneidstrangspanneinheit 16d mittels der Schneidstranghalteelemente 18d weitestgehend verhindert.

Des Weiteren weist der Schneidstrang 12d eine Vielzahl an Schneidstrangsegmenten 116d auf, die jeweils zumindest ein an einem Schneidenträgerelement 118d des jeweiligen Schneidstrangsegments 116d angeordnetes Schnitttiefenbegrenzungselement 120d zu einer Begrenzung einer maximalen Schnitttiefe eines am Schneidenträgerelement 118d des jeweiligen Schneidstrangsegments 116d angeordneten Schneidelements 122d aufweisen (Figur 7). Somit umfasst jedes der Schneidstrangsegmente 116d jeweils zumindest ein Schneidenträgerelement 118d, zumindest ein am Schneidenträgerelement 118d angeordnetes Schneidelement 122d und zumindest ein am Schneidenträgerelement 118d angeordnetes Schnitttiefenbegrenzungselement 120d zu einer Begrenzung einer maximalen Schnitttiefe des Schneidelements 122d. Hierbei weist jedes der Schneidstrangsegmente 116d ein maximales Volumen auf, das kleiner ist als 20 mm³. Das Schnitttiefenbegrenzungselement 120d begrenzt eine maximale Schnitttiefe des Schneidelements 122d auf einen Wert kleiner als 0,5 mm. Die maximale Schnitttiefe des Schneidelements 122d wird durch einen Abstand zwischen einer Oberseite des Schnitttiefenbegrenzungselements 120d und einer Schneidkante des Schneidelements 122d, betrachtet entlang einer in einer Schneidebene des Schneidelements 122d zumindest im Wesentlichen senkrecht zu einer Schneidrichtung 40d des Schneidelements 122d verlaufenden Richtung, bestimmt.

Das Schnitttiefenbegrenzungselement 120d ist, betrachtet entlang der Schneidrichtung 40d des Schneidelements 122d, hinter dem Schneidelement 122d am Schneidenträgerelement 118d angeordnet. Somit wird, betrachtet entlang der Schneidrichtung 40d des Schneidelements 122d, ein Spanraum des jeweiligen Schneidstrangsegments 116d gebildet. Hierbei ist das Schnitttiefenbegrenzungselement 120d einstückig mit dem Schneidenträgerelement 118d ausgebildet. Die Schneidstrangsegmente 116d des Schneidstrangs 12d weisen alle jeweils ein Schnitttiefenbegrenzungselement 120d auf. Es ist jedoch auch denkbar, dass nicht jedes Schneidstrangsegment 116d des Schneidstrangs 12d ein Schnitttiefenbegrenzungselement 120d aufweist und die Schneidstrangsegmente 116d zur Bildung des Schneidstrangs 12d in verschiedenen Anordnungen mit und ohne Schnitttiefenbegrenzungselement 120d miteinander kombiniert werden.

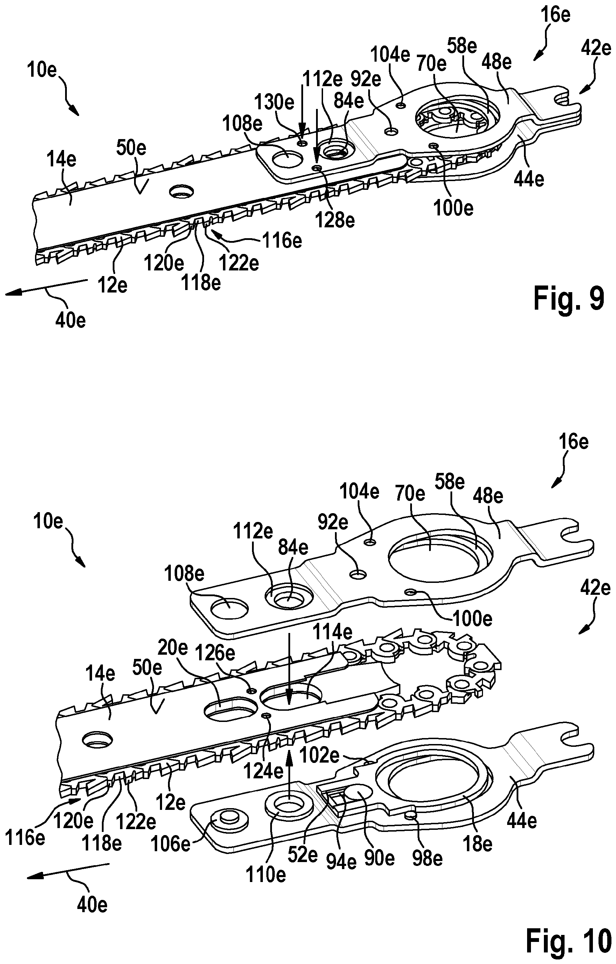

Figur 9 zeigt eine weitere, alternative Werkzeugmaschinentrennvorrichtung 10e, die zumindest einen Schneidstrang 12e und zumindest eine Führungseinheit 14e zu einer Führung des Schneidstrangs 12e umfasst. Die Führungseinheit 14e bildet zusammen mit dem Schneidstrang 12e ein geschlossenes System. Zudem umfasst die Werkzeugmaschinentrennvorrichtung 10e zumindest eine an der Führungseinheit 14e angeordnete Schneidstrangspanneinheit 16e, die zu einem Spiel- und/oder Toleranzausgleich des Schneidstrangs 12e vorgesehen ist. Die Schneidstrangspanneinheit 16e umfasst zumindest ein Schneidstranghalteelement 18e, das dazu vorgesehen ist, den Schneidstrang 12e in zumindest einer Kopplungsposition zu halten. Das Schneidstranghalteelement 18e ist scheibenförmig ausgebildet. Die Schneidstrangspanneinheit 16e weist ferner ein weiteres Schneidstranghalteelement 58e auf, das eine zum Schneidstranghalteelement 18e analoge Ausgestaltung aufweist. Das Schneidstranghalteelement 18e und das weitere Schneidstranghalteelement 58e sind, betrachtet entlang einer zumindest im Wesentlichen senkrecht zu einer Außenfläche 46e der Führungseinheit 14e und zu einer weiteren Außenfläche 50e der Führungseinheit 14e verlaufenden Richtung, zwischen einem Spannelement 44e der Schneidstrangspanneinheit 16e und einem weiteren Spannelement 48e der Schneidstrangspanneinheit 16e angeordnet (Figur 9).

Die Werkzeugmaschinentrennvorrichtung 10e aus den Figuren 9 und 10 weist eine zur Werkzeugmaschinentrennvorrichtung 10d aus den Figuren 7 und 8 zumindest im Wesentlichen analoge Ausgestaltung auf. Der Unterschied zwischen der Werkzeugmaschinentrennvorrichtung 10e aus den Figuren 9 und 10 und der Werkzeugmaschinentrennvorrichtung 10d aus den Figuren 7 und 8 besteht in einer Fixierung des Spannelements 44e und des weiteren Spannelements 48e nach einem Spiel- und/oder Toleranzausgleich des Schneidstrangs 12e und/oder nach einem Spannen des Schneidstrangs 12e mittels einer Vorspannvorrichtung. Hierbei weist die Führungseinheit 14e zusätzlich zu Lagerausnehmungen 20e, 114e zu einer Aufnahme von Verbindungselementen 106e, 108e, 110e, 112e des Spannelements 44e und des weiteren Spannelements 48e zwei Sicherungsausnehmungen 124e, 126e auf (Figur 10). Es ist jedoch auch denkbar, dass die Führungseinheit 14e eine von zwei abweichende Anzahl an Sicherungsausnehmungen 124e, 126e aufweist.

Nachdem ein Spiel- und/oder Toleranzausgleich des Schneidstrangs 12e und/oder ein Spannen des Schneidstrangs 12e mittels der Vorspannvorrichtung erfolgt ist, wird anschließend die Schneidstrangspanneinheit 16e mittels einer hier nicht näher dargestellten Fixiereinheit der Vorspannvorrichtung durch ein Prägen zumindest eines der Verbindungselemente 106e, 108e, 110e, 112e und zusätzlich mittels eines Prägens von zwei Prägefortsätzen 128e, 130e (es sind lediglich die Prägefortsätze 128e, 130e des weiteren Spannelements 48e in Figur 9 dargestellt) an das Spannelement 44e bzw. an das weitere Spannelement 48e an der Führungseinheit 14e fixiert. Die Prägefortsätzen 128e, 130e greifen hierbei zu einer Fixierung des Spannelements 44e bzw. des weiteren Spannelements 48e an der Führungseinheit 14e in die Sicherungsausnehmungen 124e, 126e ein. Zur Ermöglichung eines Eingriffs der Prägefortsätze 128e, 130e in die Sicherungsausnehmungen 124e, 126e nach einem Spiel- und/oder Toleranzausgleich des Schneidstrangs 12e und/oder nach einem Spannen des Schneidstrangs 12e wird sichergestellt, dass ein Prägestempel der Fixiereinheit während eines Spannvorgangs der Vorspannvorrichtung stets über den Sicherungsausnehmungen 124e, 126e angeordnet ist. Hierbei wird der Prägestempel bei einer Relativbewegung der Führungseinheit 14e relativ zur Schneidstrangspanneinheit 16e stets mit der Führungseinheit 14e mitbewegt. Nach einer Entnahme der Werkzeugmaschinentrennvorrichtung 10e von und/oder aus der Vorspannvorrichtung wird ein komplettes Hineinfallen des Schneidstrangs 12e in eine Kopplungsausnehmung 70e der Schneidstrangspanneinheit 16e mittels der Schneidstranghalteelemente 18e weitestgehend verhindert.

## Patentansprüche

1. Werkzeugmaschinentrennvorrichtung mit zumindest einem Schneidstrang (12a; 12c; 12d; 12e) und mit zumindest einer Führungseinheit (14a; 14c; 14d; 14e) zu einer Führung des Schneidstrangs (12a; 12c; 12d; 12e), die zusammen mit dem Schneidstrang (12a; 12c; 12d; 12e) ein geschlossenes System bildet, und mit zumindest eine an der Führungseinheit (14a; 14c; 14d; 14e) angeordnete Schneidstrangspanneinheit (16a; 16c; 16d; 16e), die zu einem Spiel- und/oder Toleranzausgleich des Schneidstrangs (12a; 12c; 12d; 12e) vorgesehen ist, **dadurch gekennzeichnet, dass** die Schneidstrangspanneinheit (16a; 16c; 16d; 16e) zumindest ein scheibenförmiges Schneidstranghalteelement (18a; 18c; 18d; 18e) umfasst, das dazu vorgesehen ist, den Schneidstrang (12a; 12c; 12d; 12e) mittels einer formschlüssigen Verbindung mittels einer Fläche des Schneidstranghalteelementes (18a; 18c; 18d; 18e) in zumindest einer Kopplungsposition, in der der Schneidstrang (12a; 12c; 12d; 12e) bei einer Kopplung der Führungseinheit (14a; 14c; 14d; 14e) mit einer Kopplungsvorrichtung (32a) einer tragbaren Werkzeugmaschine direkt mit einem Antriebselement der tragbaren Werkzeugmaschine verbindbar ist, zu halten, sodass nach einer Entnahme der Werkzeugmaschinentrennvorrichtung von einer Vorspannvorrichtung (80a, 80b, 80c) ein Hineinfallen des Schneidstrangs (12a; 12c; 12d; 12e) in eine Kopplungsausnehmung (70a; 70c; 70d; 70e) der Schneidstrangspanneinheit (16a; 16c; 16d; 16e) mittels der Schneidstranghalteelemente (18a: 18c: 18d; 18e) weitestgehend verhindert wird.

2. Werkzeugmaschinentrennvorrichtung nach einem der vorhergehenden Ansprüche, **dadurch gekennzeichnet, dass** die Schneidstrangspanneinheit (16a) beweglich an der Führungseinheit (14a) gelagert ist.

3. Werkzeugmaschinentrennvorrichtung nach einem der vorhergehenden Ansprüche, **dadurch gekennzeichnet, dass** die Führungseinheit (14a; 14c) zumindest eine Lagerausnehmung (20a; 20c; 20d, 114d; 20e, 114e) aufweist, in die zumindest ein Lagerelement (22a, 24a; 22c) der Schneidstrangspanneinheit (16a; 16c) oder ein Verbindungselement (106d, 108d, 110d, 112d; 106e, 108e, 110e, 112e) eingreift.

4. Werkzeugmaschinentrennvorrichtung nach Anspruch 3, **dadurch gekennzeichnet, dass** die Lagerausnehmung (20a; 20d; 20e) als Langloch ausgebildet ist.

5. Werkzeugmaschinentrennvorrichtung nach einem der vorhergehenden Ansprüche, **dadurch gekennzeichnet, dass** die Schneidstrangspanneinheit (16a) zumindest ein Verstellelement (26a) aufweist, das dazu vorgesehen ist, zumindest eine Position eines Schneidstranghalteelements (18a) der Schneidstrangspanneinheit (16a) relativ zur Führungseinheit (14a) einzustellen.

6. Tragbare Werkzeugmaschine mit einer Kopplungsvorrichtung (32a) zur formschlüssigen und/oder kraftschlüssigen Kopplung mit einer Werkzeugmaschinentrennvorrichtung nach einem der vorhergehenden Ansprüche.

7. Werkzeugmaschinensystem mit einer tragbaren Werkzeugmaschine nach Anspruch 6 und mit zumindest einer Werkzeugmaschinentrennvorrichtung nach einem der Ansprüche 1 bis 5.

## Claims

1. Power-tool parting device, having at least one cutting strand (12a; 12c; 12d; 12e), and having at least one guide unit (14a; 14c; 14d; 14e) for guiding the cutting strand (12a; 12c; 12d; 12e), which, in combination with the cutting strand (12a; 12c; 12d; 12e), forms a closed system, and having at least one cutting-strand tensioning unit (16a; 16c; 16d; 16e), which is disposed on the guide unit (14a; 14c; 14d; 14e) and which is provided for compensating play and/or tolerance of the cutting strand (12a; 12c; 12d; 12e), **characterized in that** the cutting-strand tensioning unit (16a; 16c; 16d; 16e) comprises at least one cutting-strand holding element (18a; 18c; 18d; 18e), which is in the shape of a disc and which is provided to hold the cutting strand (12a; 12c; 12d; 12e) by means of a form-closed connection, by means of a face of the cutting-strand holding element (18a; 18c; 18d; 18e), in at least one coupling position, in which the cutting strand (12a; 12c; 12d; 12e) is connectable directly to a drive element of a portable power tool when the guide unit (14a; 14c; 14d; 14e) is coupled to a coupling device (32a) of the portable power tool, and therefore, after the power-tool parting device has been removed from a pretensioning device (80a, 80b, 80c), the cutting strand (12a; 12c; 12d; 12e) is to a large extent prevented from falling into a coupling recess (70a; 70c; 70d; 70e) of the cutting-strand tensioning unit (16a; 16c; 16d; 16e), by means of the cutting-strand holding elements (18a; 18c; 18d; 18e).

2. Power-tool parting device according to any one of the preceding claims, **characterized in that** the cutting-strand tensioning- unit (16a) is movably mounted on the guide unit (14a).

3. Power-tool parting device according to any one of the preceding claims, **characterized in that** the guide unit (14a; 14c) has at least one bearing recess (20a; 20c; 20d, 114d; 20e, 114e), in which at least one bearing element (22a, 24a; 22c) of the cutting-strand tensioning unit (16a; 16c) or a connecting element (106d, 108d, 110d, 112d; 106e, 108e, 110e, 112e) engages.

4. Power-tool parting device according to Claim 3, **characterized in that** the bearing recess (20a; 20d; 20e) is realized as an oblong hole.

5. Power-tool parting device according to any one of the preceding claims, **characterized in that** the cutting-strand tensioning unit (16a) has at least one adjusting element (26a), which is provided to set at least one position of a cutting-strand holding element (18a) of the cutting-strand tensioning unit (16a) relative to the guide unit (14a) .

6. Portable power tool comprising a coupling device (32a) for coupling, in a form-closed and/or force-closed manner, to a power-tool parting device according to any one of the preceding claims.

7. Power tool system comprising a portable power tool according to Claim 6 and comprising at least one power-tool parting device according to any one of Claims 1 to 5.

## Revendications

1. Dispositif de coupe de machine-outil, comprenant au moins une chaîne de coupe (12a ; 12c ; 12d ; 12e) et au moins une unité de guidage (14a ; 14c ; 14d ; 14e) en vue de guidage de la chaîne de coupe (12a ; 12c ; 12d ; 12e), qui forme, conjointement avec la chaîne de coupe (12a ; 12c ; 12d ; 12e), un système fermé, et comprenant au moins une unité de serrage de chaîne de coupe (16a ; 16c ; 16d ; 16e) qui est prévue pour compenser un jeu et/ou des tolérances de la chaîne de coupe (12a ; 12c ; 12d ; 12e), **caractérisé en ce que** l'unité de serrage de chaîne de coupe (16a ; 16c ; 16d ; 16e) comprend au moins un élément de retenue de chaîne de coupe en forme de disque (18a ; 18c ; 18d ; 18e) qui est prévu pour retenir la chaîne de coupe (12a ; 12c ; 12d ; 12e) au moyen d'une liaison par engagement par correspondance de formes au moyen d'une surface de l'élément de retenue de chaîne de coupe (18a ; 18c ; 18d ; 18e) dans au moins une position de couplage dans laquelle la chaîne de coupe (12a ; 12c ; 12d ; 12e), dans le cas d'un couplage de l'unité de guidage (14a ; 14c ; 14d ; 14e) avec un dispositif de couplage (32a) d'une machine-outil portative peut être connectée directement à un élément d'entraînement de la machine-outil portative, de telle sorte qu'après un enlèvement du dispositif de coupe de machine-outil d'un dispositif de pré-serrage (80a, 80b, 80c), une chute de la chaîne de coupe (12a ; 12c ; 12d ; 12e) dans un évidement de couplage (70a ; 70c ; 70d ; 70e) de l'unité de serrage de chaîne de coupe (16a ; 16c ; 16d ; 16e) soit autant que possible empêchée au moyen des éléments de retenue de chaîne de coupe (18a ; 18c ; 18d ; 18e).

2. Dispositif de coupe de machine-outil selon l'une quelconque des revendications précédentes, **caractérisé en ce que** l'unité de serrage de chaîne de coupe (16a) est supportée de manière déplaçable au niveau de l'unité de guidage (14a).

3. Dispositif de coupe de machine-outil selon l'une quelconque des revendications précédentes, **caractérisé en ce que** l'unité de guidage (14a ; 14c) présente au moins un évidement de palier (20a ; 20c ; 20d, 114d ; 20e, 114e) dans lequel s'engage au moins un élément de palier (22a, 24a ; 22c) de l'unité de serrage de chaîne de coupe (16a ; 16c) ou un élément de liaison (106d, 108d, 110d, 112d ; 106e, 108e, 110e, 112e).

4. Dispositif de coupe de machine-outil selon la revendication 3, **caractérisé en ce que** l'évidement de palier (20a ; 20d ; 20e) est réalisé sous forme de trou oblong.

5. Dispositif de coupe de machine-outil selon l'une quelconque des revendications précédentes, **caractérisé en ce que** l'unité de serrage de chaîne de coupe (16a) présente au moins un élément de réglage (26a) qui est prévu pour ajuster au moins une position d'un élément de retenue de chaîne de coupe (18a) de l'unité de serrage de chaîne de coupe (16a) par rapport à l'unité de guidage (14a) .

6. Machine-outil portative comprenant un dispositif de couplage (32a) pour le couplage par engagement par correspondance de formes et/ou par force à un dispositif de coupe de machine-outil selon l'une quelconque des revendications précédentes.

7. Système de machine-outil comprenant une machine-outil portative selon la revendication 6 et au moins un dispositif de coupe de machine-outil selon l'une quelconque des revendications 1 à 5.
